# EUROPÄISCHE PATENTANMELDUNG

(11) **EP 2 756 759 A1**
(43) Veröffentlichungstag der Anmeldung: **23.07.2014**
(21) Anmeldenummer: 14151767.2
(22) Anmeldetag: 20.01.2014
(51) Int. Cl.: A22C 21/00

(54) **Schlachthakenanordnung für die Nutztierverarbeitung, insbesondere für das Aufnehmen von Geflügeltieren**

(30) Priorität: 19.01.2013 DE 102013000940
(71) Anmelder: Heinrich Wichelmann Metallbau GmbH, 49393 Lohne (DE)
(72) Erfinder: Wichelmann, Bernhard, 49393 Lohne (DE)
(74) Vertreter: Jabbusch, Matthias

(57) **Zusammenfassung**

Bei einer Schlachthakenanordnung für die Nutztierverarbeitung, nämlich für das Aufnehmen von Nutztieren an ihren Extremitäten, insbesondere für das Aufnehmen von Geflügeltieren an ihren Ständern, umfassend sich verjüngende Klemmabschnitte zum Einführen der Extremitäten, ist vorgesehen, dass sie aus einem flachen Material gefertigt ist und dass sich die Weite der Klemmabschnitte in Einführrichtung der Extremitäten stufenweise verringert bis zu einem Maß kleiner oder gleich dem geringsten Querschnittsmaß der Extremitäten der zu verarbeitenden Nutztiere.

Mit dieser Schlachthakenanordnung werden Tierverluste bei der Verarbeitung der Nutztiere reduziert.

## Beschreibung

Die Erfindung betrifft eine Schlachthakenanordnung für die Nutztierverarbeitung, nämlich für das Aufnehmen von Nutztieren an ihren Extremitäten, insbesondere für das Aufnehmen von Geflügeltieren an ihren Ständern, umfassend sich verjüngende Klemmabschnitte zum Einführen der Extremitäten.

Nutztiere werden heute in großen Betrieben industriell geschlachtet. Nutztiere werden dabei an ihren Extremitäten, beispielsweise an ihren Beinen, aufgehängt. Auch bei dem Schlachten von Geflügel erfolgt das Aufhängen der Geflügeltiere an ihren Beinen, diese werden Ständer genannt. Nach dieser Aufnahme hängen die Nutztiere kopfüber und können einzelnen Verarbeitungsstationen zugeführt werden.

Bekannte Schlachthaken werden aus Rundmaterialien gefertigt, sie haben sich z. B. konusartig verjüngende Klemmabschnitte zum Einführen der z. B. Ständer. Die Weiten der Ständer von Geflügeltieren schwanken jedoch. Kleine Tiere haben kleine Ständer, diese können aus den bekannten Haken herausfallen. Große Tiere haben große Ständer, da tritt das Problem auf, dass diese Tiere nicht tief genug in die Schlachthakenanordnung hereingezogen werden können. Auch in diesem Fall fallen Tiere aus der Schlachthakenanordnung heraus und gehen in den Verlust.

In einem normalen industriellen Schlachtbetrieb können auf diese Weise 2 % der Tiere, da offensichtlich nicht der Norm entsprechen, aus den Schlachthaken herausfallen. Bei einer normalen Schlachtgeschwindigkeit von ca. 10.000 Tieren pro Stunde und einem 16-Stunden-Tag sind es bis zu 3.000 Tiere pro Tag, die verloren gehen können.

Der Erfindung liegt die Aufgabe zugrunde, eine Schlachthakenanordnung der eingangs genannten Gattung aufzuzeigen, mit der Tierverluste bei der Verarbeitung der Nutztiere reduziert werden.

Diese Aufgabe ist erfindungsgemäß dadurch gelöst, dass die Schlachthakenanordnung aus einem flachen Material gefertigt ist und dass sich die Weite der Klemmabschnitte kleiner oder gleich dem Querschnittsmaß der Extremitäten der zu verarbeitenden Nutztiere.

Die erfindungsgemäßen Schlachthaken unterscheiden sich konstruktiv vom Stand der Technik durch ihre Herstellung aus einem flachen Material. Das flache Material kann Blech sein, Konturen in dieses flache Material können exakt beispielsweise durch Stanzen oder andere Ausschneidverfahren hergestellt werden. Dadurch ist eine stets maßhaltige Fertigung der Schlachthaken gewährleistet.

Die Weitenausbildung der Klemmabschnitte wird erfindungsgemäß stufenförmig verringert. Die Verringerung erfolgt soweit, dass auch das Nutztier mit dem kleinsten Querschnittsmaß sich noch in den Klemmabschnitten verklemmen kann, ohne aus der Schlachthakenanordnung herauszufallen. Größere Tiere werden in einer größeren Stufe eingeklemmt, kleinere Tiere in einer kleineren Stufe. Beim Einführen jedes Nutztieres in die Schlachthakenanordnung wird dieses soweit eingeführt, bis es die Stufe der Klemmabschnitte erreicht hat, in der eine sichere Klemmung eintritt.

Nach einer Weiterbildung der Erfindung ist vorgesehen, dass die Schlachthakenanordnung in Einführrichtung der Extremitäten Klemmabschnitte mit nachfolgenden Weiten von etwa 11 mm, 9 mm und 8 mm hat. Die Weite der Klemmabschnitte verringert sich somit von 11 mm bis zu 8 mm. Geflügeltiere mit Ständern von einer Weite von 10 mm werden bereits in der ersten Stufe gehalten. Befindet sich unter den Geflügeltieren jedoch ein kleines Tier mit einer Ständerweite von 8 mm, wird dies in der letzten Stufe aufgenommen.

Die Übergänge zwischen den einzelnen Klemmabschnitten sind vorzugsweise abgeschrägt ausgebildet, um hier keine scharfen Kanten für die Geflügeltiere auszubilden, welche zudem das Einführen der Extremitäten in einen nachfolgenden kleineren Klemmabschnitt behindern würden.

Zur weiteren Ausbildung der Erfindung ist vorgesehen, dass in Einführrichtung der Extremitäten oberhalb der Weitenbereiche jeweils eine Einlaufschräge mit etwa 5° bis 6° Grad Neigung ausgebildet ist. Diese Einlaufschräge führen eingeführte Extremitäten in Richtung der Klemmabschnitte, dabei erfolgt bereits eine Zentrierung der Extremitäten. Noch weiter oberhalb der Einlaufschrägen ist ein rahmenartiger Einführbereich für die Extremitäten angeordnet, der zunächst überhaupt eine Lagezuordnung von Extremitäten zu der Schlachthakenanordnung ermöglicht.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht einer Schlachthakenanordnung für die Verarbeitung von Geflügeltieren,
- Fig. 2:: eine Seitenansicht der Schlachthakenanordnung gemäß Fig. 1, und
- Fig. 3:: eine maßstäblich vergrößerte Ansicht der Einzelheit A in Fig. 2.

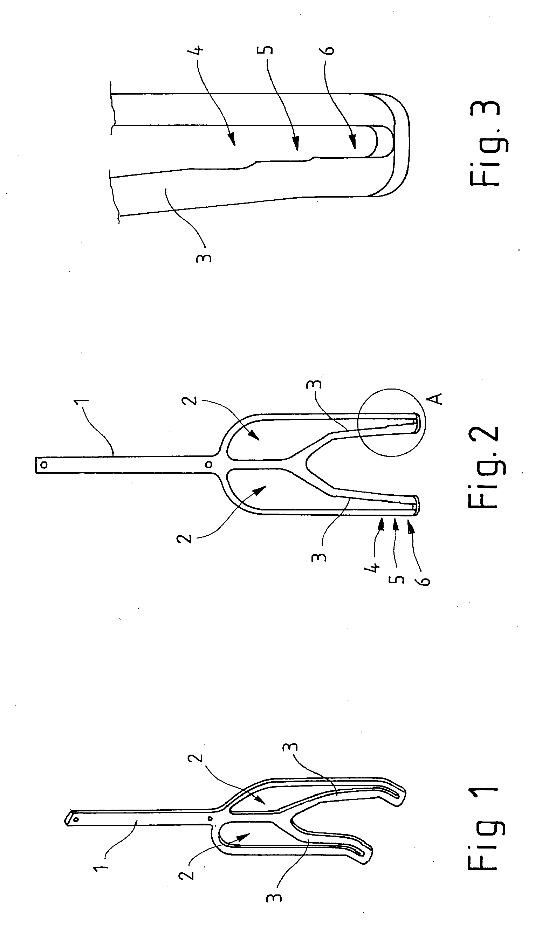

Die Schlachthakenanordnung in Fig. 1 ist einstückig aus einem flachen Material gefertigt worden. Sie weist einen profilförmigen Halteabschnitt 1 auf, mit dem sie in eine größere Anordnung eingefügt werden kann.

Zur Aufnahme der Extremitäten von Geflügeltieren weist die Schlachthakenanordnung 2 rahmenartige Einführbereiche 2 auf. In diese kann ein Geflügeltier mit beiden Ständern durch Hilfspersonen eingeführt werden. Die Ständer werden dann nach unten über Einlaufschrägen 3 geführt. Die Einlaufschräge 3 bildet einen Winkel von etwa 6° Grad aus.

Im unteren Bereich der Schlachthakenanordnung sind Klemmabschnitte 4-6 vorgesehen, wie in Fig. 2 und 3 erkennbar. Der oberste Klemmabschnitt 4 hat eine Weite von 11 mm, der nächste Klemmabschnitt 5 eine Weite von 9 mm und der unterste Klemmabschnitt 6 eine Weite von 8 mm.

## Patentansprüche

1. Schlachthakenanordnung für die Nutztierverarbeitung, nämlich für das Aufnehmen von Nutztieren an ihren Extremitäten, insbesondere für das Aufnehmen von Geflügeltieren an ihren Ständern, umfassend sich verjüngende Klemmabschnitte zum Einführen der Extremitäten,
**dadurch gekennzeichnet,**
**dass** sie aus einem flachen Material gefertigt ist und dass sich die Weite der Klemmabschnitte (4, 5, 6) in Einführrichtung der Extremitäten stufenweise verringert bis zu einem Maß kleiner oder gleich dem geringsten Querschnittsmaß der Extremitäten der zu verarbeitenden Nutztiere.

2. Schlachthakenanordnung nach Anspruch 1, **dadurch gekennzeichnet, dass** sie aus Blech gefertigt ist.

3. Schlachthakenanordnung nach Anspruch 1 oder 2, **dadurch gekennzeichnet, dass** sie in Einführrichtung der Extremitäten Klemmabschnitte (4, 5, 6) mit nachfolgenden Weiten von etwa 11 mm, 9 mm und 8 mm hat.

4. Schlachthakenanordnung nach einem der vorhergehenden Ansprüche, **dadurch gekennzeichnet, dass** die Übergänge zwischen den einzelnen Klemmabschnitten (4, 5, 6) abgeschrägt sind.

5. Schlachthakenanordnung nach einem der vorhergehenden Ansprüche, **dadurch gekennzeichnet, dass** in Einführrichtung der Extremitäten oberhalb der Weitenbereiche jeweils eine Einlaufschräge (3) mit etwa bis 5° bis 6° ausgebildet ist.

6. Schlachthakenanordnung nach Anspruch 5, **dadurch gekennzeichnet, dass** in Einführungsrichtung der Extremitäten weiter oberhalb der Einlaufschräge (3) ein rahmenartiger Einführbereich (2) für die Extremitäten angeordnet ist.
